# EUROPEAN PATENT APPLICATION

(11) **EP 1 432 193 A1**
(43) Date of publication of application: **23.06.2004**
(21) Application number: 02293129.9
(22) Date of filing: 18.12.2002
(51) Int. Cl.: H04L 27/26, H04L 7/00

(54) **Integrated modem circuit with software implemented PLL filter**

(71) Applicant: ALCATEL, 75008 Paris (FR)
(72) Inventor: Antoine, Philippe, 1457 Walhain (BE); Gendarme, Christophe Bernard André, 2000 Antwerpen (BE); Van Hoogenbemt, Stefaan Margriet Albert, 2800 Mechelen (BE)
(74) Representative: Narmon, Gisèle Marie Thérèse

(57) **Abstract**

An integrated modem circuits comprising processor-systems (1) and hardware (2,3) for exchanging signals with another modem circuit 1 Mb/s or more are provided with low cost, accurate, flexible filter software (11) for embodying a digital phase locked loop filter. Said hardware (2,3) comprises fast modules (22,32) for compensating for sample processing. The insight of hardware phase locked loops being expensive, not accurate, inflexible and of software phase locked loops being slow results in the basic idea of the phase locked loop calculations being done in software and the compensations being done in hardware. Sample software (14,15) processes samples (shifting - adding - deleting). Said hardware (2,3) comprises in the transmission path (2) mappers (21), rotors (22) and inverse Fourier transformators (23) and in the receiving path (3) Fourier transformators (33), rotors (32) and demappers (31). Control software (12,13) controls said rotors (22,32). In software in processor-system (1) there are initialization steps (101), reading steps (102), detection steps (104,105,106,111,112,115) executing steps (108,109), adaptation steps (110,116,117), and incrementation steps (114,118).

## Description

The invention relates to an integrated modem circuit comprising a processor-system and hardware for exchanging signals with another modem circuit, which integrated modem circuit comprises a digital phase locked loop filter.

Such an integrated modem circuit corresponds for example with an Asymmetric Digital Subscriber Line modem or ADSL modem or with a Very high speed Digital Subscriber Line modem or VDSL modem etc. Said digital phase locked loop filter synchronizes a modem signal (a signal received from said other modem circuit or a signal to be transmitted to said other modem circuit) with an oscillation signal by comparing both signals with each other and generating an error signal etc.

A prior art modem circuit is known from US 5,790,594, which discloses a modem circuit designed to operate at 2400 to 28800 bit/s and which comprises for example a hardware phase locked loop for the transmitting path and a software phase locked loop for the receiving path (see its figure 6).

The known integrated modem circuit is disadvantageous, inter alia, due to operating at a low speed.

It is an object of the invention, inter alia, of providing an integrated modem circuit as defined in the preamble, which can operate at a much higher speed.

The integrated modem circuit according to the invention is characterized in that said integrated modem circuit exchanges signals with another modem circuit at 1 Mb/s or more, with said processor-system comprising filter software for embodying said digital phase locked loop filter and with said hardware comprising at least one module for compensating for sample processing.

By providing the processor-system with filter software for embodying said digital phase locked loop filter and by providing the hardware with at least one module for compensating for sample processing, an integrated modem circuit has been created which can operate at 1 Mb/s or more. Said filter software is low cost and more accurate (necessary at high speeds) compared to a hardware phase locked loop filter and offers more flexibility. Said hardware module can compensate (adapt signals) at higher speeds compared to software phase locked loops.

It should be noted that modems are able to negotiate with each other the speed to be used. Therefore, the speed of 1 Mb/s or more corresponds with the maximum or theoretical modem speed, during operation, for example in case of a low quality connection between both modems, lower speeds can be negotiated.

It should be further noted that higher speeds than 1 Mb/s are not to be excluded. For example, the integrated modem circuit according to the invention can also operate at a speed of 10 Mb/s or more, and during tests, speeds of 60 Mb/s or more have been reached.

A first embodiment of the integrated modem circuit according to the invention is defined by claim 2.

By providing said processor-system with sample software for processing samples in dependence of results originating from said phase locked loop filter, samples can be processed low costly and accurately, with said sample software offering much flexibility. Said processing for example comprises the shifting of samples and/or the adding (at one side) and the deleting (at the other side) of samples of a packet signal represented by these samples for making signal adaptations (phase corrections).

A second embodiment of the integrated modem circuit according to the invention is defined by claim 3.

By providing said hardware in the transmission path with a mapper, a rotor and an inverse Fourier transformator and in a receiving path with a Fourier transformator, a rotor and a demapper, with at least one of said rotors forming said module, the design of the integrated modem circuit is an efficient design with an optimal separation of hardware and software. Said rotor(s) forming said module will compensate for said shifting/adding/deleting of samples by rotating the signal correspondingly.

A third embodiment of the integrated modem circuit according to the invention is defined by claim 4.

By providing said processor-system with control software for controlling at least one of said rotors in dependence of results originating from said phase locked loop filter, with at least one of said transformators being controlled by results originating from said sample software, the control in the integrated modem circuit has been optimized.

A fourth embodiment of the integrated modem circuit according to the invention is defined by claim 5.

By introducing the initialization step and/or the reading step and/or the first detection step and/or the second detection step and/or the third detection step and/or the executing step, this structure software has an efficient main path, and forms a reliable structure for performing software programs like said filter software, sample software and control software etc.

A fifth embodiment of the integrated modem circuit according to the invention is defined by claim 6.

By introducing in response to a positive detection of said first instruction the first adaptation step followed by at least the fourth detection step and/or the fifth detection step, with said first adaptation step and/or said fourth detection step and/or said fifth detection step being followed by the first incrementation step, this structure software has an efficient first deviating path.

A sixth embodiment of the integrated modem circuit according to the invention is defined by claim 7.

By introducing in response to the positive detection of said second instruction the sixth detection step followed by at least the second adaptation step, with said second adaptation step and/or said sixth detection step being followed by the second incrementation step, this structure software has an efficient second deviating path.

The invention further relates to a processor-system for use in an integrated modem circuit comprising said processor-system and hardware for exchanging signals with another modem circuit, which integrated modem circuit comprises a digital phase locked loop filter, which processor-system according to the invention is characterized in that said integrated modem circuit exchanges signals with another modem circuit at 1 Mb/s or more, with said processor-system comprising filter software for embodying said digital phase locked loop filter and with said hardware comprising at least one module for compensating for sample processing.

The invention yet further relates to a processor program product to be run via a processor-system for use in an integrated modem circuit comprising said processor-system and hardware for exchanging signals with another modem circuit, which integrated modem circuit comprises a digital phase locked loop filter, which processor program product according to the invention is characterized in that said integrated modem circuit exchanges signals with another modem circuit at 1 Mb/s or more, with said processor program product comprising the function of filtering for embodying said digital phase locked loop filter, and with said hardware comprising at least one module for compensating for sample processing.

The invention also relates to a method for use in an integrated modem circuit comprising a processor-system and hardware for exchanging signals with another modem circuit, which integrated modem circuit comprises a digital phase locked loop filter, which method according to the invention is characterized in that said integrated modem circuit exchanges signals with another modem circuit at 1 Mb/s or more, with said method comprising the steps of filtering for embodying said digital phase locked loop filter by means of filtering software and of compensating for sample processing by means of at least one module of said hardware.

Embodiments of the processor-system according to the invention and of the processor program product according to the invention and of the method according to the invention correspond with the embodiments of the integrated modem circuit according to the invention.

The invention is based upon an insight, inter alia, that, at high speeds, hardware phase locked loops are expensive and not accurate sufficiently and offer no flexibility and that, at high speeds, software phase locked loops are not fast enough to make the signal adaptations, and is based upon a basic idea, inter alia, that, at high speeds, the phase locked loop calculations (filtering) should be done in software and that, at high speeds, the compensations (signal adaptations) should be done in hardware.

The invention solves the problem, inter alia, of providing an integrated modem circuit as defined in the preamble, which can operate at a much higher speed, and is advantageous, inter alia, in that it is low cost, accurate, flexible, and in that it offers the simultaneous design of hardware parts and of software parts.

These and other aspects of the invention will be apparent from and elucidated with reference to the embodiments(s) described hereinafter.

Figure 1 illustrates in block diagram form an integrated modem circuit according to the invention, and

Figure 2 illustrates a flow chart of the operation of an integrated modem circuit according to the invention.

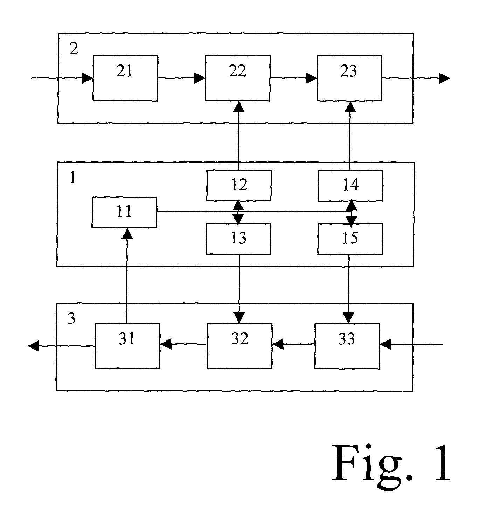

The integrated modem circuit according to the invention shown in Figure 1 like for example an Asymmetric Digital Subscriber Line modem or ADSL modem or with a Very high speed Digital Subscriber Line modem or VDSL modem etc. comprises a processor-system 1 with filter software 11 for embodying a digital phase locked loop and with control software 12,13 and sample software 14,15 and comprises hardware 2,3 with a transmission path 2 comprising from input to output a mapper 21, a rotor 22 and an inverse Fourier transformator 23 and a receiving path 3 comprising from input to output a Fourier transformator 33, a rotor 32 and a demapper 31. Control software 12,13 receives results from filter software 11, and sample software 14,15 receives results from filter software 11 (or alternatively from control software 12,13). Filter software 11 receives an input signal from demapper 31, and control software 12,13 controls rotors 22,32 and sample software 14,15 controls transformators 23,33. Alternatively, there may be further filter software 16 not shown, with filter software 11,16 receiving their same input signal from demapper 31, but with filter software 11 for example synchronizing one of the paths 2,3 and with filter software 16 synchronizing the other path 3,2.

Filter software 11 embodies a digital phase locked loop filter for synchronizing a modem signal (a signal received from said other modem circuit and flowing through receiving path 3 or a signal to be transmitted to said other modem circuit and flowing through transmitting path 2) with an oscillation signal by comparing both signals with each other and generating an error signal. Thereto, filter software 11 receives an input signal from demapper 31 and for example filters (calculates) a difference signal between this input signal and an oscillation signal and integrates and/or further filters said difference signal. Said oscillation signal may be a real oscillation signal or a calculated oscillation signal or for example a signal flowing through one of the paths etc.

Sample software 14,15 processes samples of packet signals present in transformators 23,33 in dependence of results originating from said phase locked loop filter by for example shifting samples and/or adding (at one side) and deleting (at the other side) samples of these packet signals for making signal adaptations (for example phase corrections). Said rotor(s) 22,32 compensate for said shifting/adding/deleting of samples by rotating the signal correspondingly: shifting samples and/or adding samples at one side and deleting samples at the other side in a window larger than said packet signal (and therefore comprising more samples than said packet signal to allow said shifting and/or adding and deleting) will result in a rotation of the (complex) signal (in the frequency domain), which rotation is compensated by said rotors 22,32.

Control software 12,13 controls said rotors 22,32 in dependence of results originating from said filter software 11, and said transformators 23,33 are controlled by results originating from said sample software 14,15. Small errors may be corrected by just using said rotors 22,32, larger errors will need sample corrections (shifts and/or additions and deletions) and corresponding rotations. Control software 12 for example comprises a rotor filter, and control software 13 for example comprises an integrator.

The correction in the time domain by transformators 23 and 33 is compensated by a rotation in rotors 22 and 32. This rotation is applied on (preferably all) frequency carriers interchanged between rotor 22 and transformator 23 or transformator 33 and rotor 32. This rotation means that (preferably all) carrier's amplitudes are not changed (substantially), but their phases are changed with respect to the shift in time that has been applied by said transformators 23 and 33.

Processor-system 1 further comprises one or more processors and one or more memories not shown. Transmission path 2 may further comprise a module for tuning a gain and situated between mapper 21 and rotor 22 or between rotor 22 and transformator 23, and may further comprise a windowing module coupled to an output of transformator 23 and/or a front-end module coupled to an output of said windowing module etc. Transmission path 2 operates left of transformator 23 (mapper 21 and rotor 22) in the frequency domain and right of transformator 23 in the time domain. Receiving path 3 may further comprise a windowing module coupled to an input of transformator 33 and/or a front-end module coupled to an input of said windowing module, and may further comprise a module for equalizing predefined signals and/or a module for canceling predefined signals and situated between demapper 31 and rotor 32 or between rotor 32 and transformator 33 etc. Receiving path 3 operates left of transformator 33 (demapper 31 and rotor 32) in the frequency domain and right of transformator 33 in the time domain.

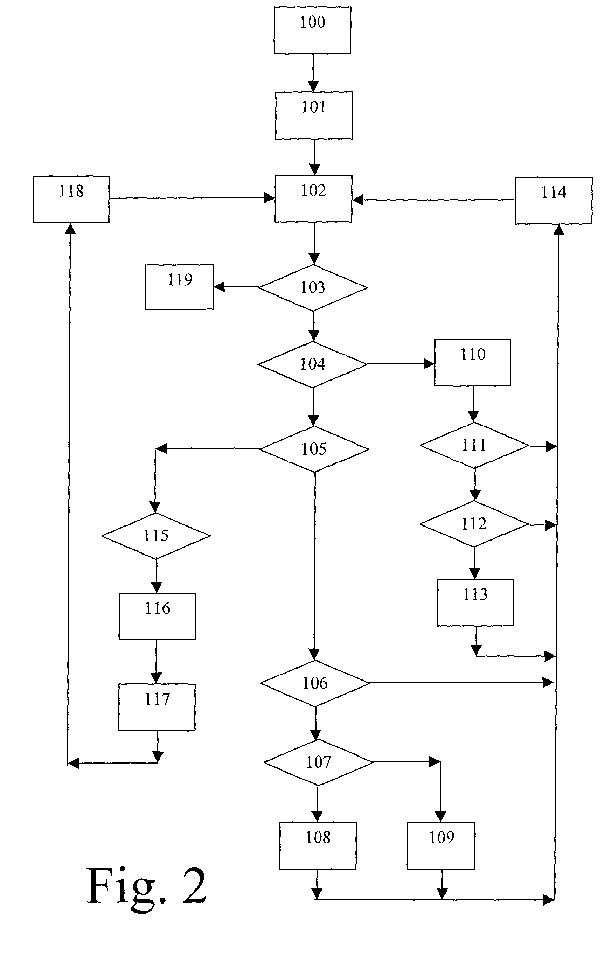

The operation of the integrated modem circuit according to the invention is illustrated by the flow chart shown in Figure 2, in which the following blocks have the following meaning:
- Block 100:: Beginning step, goto 101.
- Block 101:: Initialization step (for example NoExec=0, NoStack=0, Stack=0), goto 102.
- Block 102:: Reading step (read opcode or read software part at an address in a memory), goto 103.
- Block 103:: Detection step for finishing in response to a detection of STOP, if positive detection goto 119, if not goto 104.
- Block 104:: Detection step for detecting IF_XX, if positive detection goto 110, if not goto 105.
- Block 105:: Detection step for detecting END_IF, if positive detection goto 115, if not goto 106.
- Block 106:: Detection step for detecting NoExec=1, if positive detection goto 107, if not goto 114.
- Block 107:: Detection step of execution type, if first type goto 108, if second type goto 109.
- Block 108:: Execution step for performing an execution of a first type, goto 114.
- Block 109:: Execution step for performing an execution of a second type, goto 114.
- Block 110:: Adaptation step for making adaptations (for example Stack:=Stack+1, read var#1, read var#2), goto 111.
- Block 111:: Detection step for detecting IF_XX is ok, if ok goto 114, if not goto 112.
- Block 112:: Detection step for detecting NoExec=1, if positive detection goto 114, if not goto 113.
- Block 113:: Adaptation step for making adaptations (for example NoExec:=1, NoStack:=Stack) goto 114.
- Block 114:: Incrementation step for incrementing said address, goto 102.
- Block 115:: Detection step for detecting Stack=NoStack, if positive detection goto 116, if not goto 117.
- Block 116:: Adaptation step for making adaptations (for example NoExec:=0) goto 117.
- Block 117:: Adaptation step for making adaptations (for example Stack:=Stack-1) goto 118.
- Block 118:: Incrementation step for incrementing said address, goto 102.
- Block 119:: Finishing step.

The operation of the integrated modem circuit according to the invention as illustrated by the flow chart shown in Figure 2 is as follows. The structure software starts (Block 100: Beginning step, goto 101) and is initialized (Block 101: Initialization step) for example with respect to the parameters NoExec=0, NoStack=0, Stack=0 (NoExec: no execution of program instructions between an IF and its END_IF, due to the false reporting of the IF's logical condition; Stack: depth of nested IF statements; NoStack : Stack depth number where the nested IF statement became false, resulting in an execution interdiction for all lower nested IF statement layers) (goto 102). Then follows the reading of a software part (of a software program like said filter software, sample software and control software etc.) at a predefined address (Block 102: Reading step, goto 103). The structure software detects whether a STOP instruction is present (Block 103: Detection step for finishing in response to a detection of STOP, if positive detection goto 119, if not goto 104). If no STOP instruction is detected in said software part, the structure software detects whether an IF instruction is present (Block 104: Detection step for detecting IF_XX, if positive detection goto 110, if not goto 105). If no IF instruction is detected in said software part, the structure software detects whether an END instruction is present (Block 105: Detection step for detecting END_IF, if positive detection goto 115, if not goto 106). If no END_IF instruction is detected in said software part, the structure software detects whether the parameter NoExec=1 (Block 106: Detection step for detecting NoExec=1, if positive detection goto 107, if not goto 114). (NoExec: set due to an IF statement with false condition, no program instruction execution is allowed) If not, the structure software detects the type of execution to be performed (Block 107: Detection step of execution type, if first type goto 108, if second type goto 109) and performs this execution or these executions (Block 108: Execution step for performing an execution of a first type, goto 114) (Block 109: Execution step for performing an execution of a second type, goto 114).

In case of said IF instruction being detected, parameter adaptations are made (Block 110: Adaptation step for making adaptations) for example with respect to the parameters Stack:=Stack+1, read var#1, read var#2 (Stack: in Block 110 the stack depth is increased as the instruction is an IF statement; VAR #1 and VAR # 2: the two variables in the IF statement that need to be logically compared, leading to a true or false result. They are read in Block 110. The logical comparison operation is performed in block 111) (goto 111). The structure software detects whether the instruction IF is ok (Block 111: Detection step for detecting IF_XX is ok, if ok goto 114, if not goto 112), in case of not being ok, the structure software detects whether the parameter NoExec=1 (Block 112: Detection step for detecting NoExec=1, if positive detection goto 114, if not goto 113), if not, adaptations are made (Block 113: Adaptation step for making adaptations) for example with respect to the parameters NoExec:=1, NoStack:=Stack (NoExec: in case the execution was refused in block 110, two possibilities exist. In the first case "NoExec" was already set, so nothing needs to be done; in the second case, it wasn't set yet, but will be set now; NoStack: logs the stack depth from which all execution is forbidden) (goto 114). Finally said address is incremented (Block 114: Incrementation step for incrementing said address, goto 102) etc.

In case of said END_IF instruction being detected, the structure software detects whether parameters are equal (Block 115) like for example with respect to the parameters Stack=NoStack (if positive detection goto 116, if not goto 117). If yes, adaptations are made (Block 116: Adaptation step for making adaptations (for example NoExec:=0) goto 117) and further adaptations are made, if not, said further adaptations are made (Block 117) for example with respect to the parameter Stack:=Stack-1 (goto 118). Then said address is incremented (Block 118: Incrementation step for incrementing said address, goto 102) etc.

In case of said STOP instruction being detected, the structure software is finished (Block 119: Finishing step).

The expression "for" in for example "for exchanging" and "for embodying" and "for processing" and "for controlling" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities.

The invention is based upon an insight, inter alia, that, at high speeds, hardware phase locked loops are expensive and not accurate sufficiently and offer no flexibility and that, at high speeds, software phase locked loops are not fast enough to make the signal adaptations, and is based upon a basic idea, inter alia, that, at high speeds, the phase locked loop calculations (filtering) should be done in software and that, at high speeds, the compensations (signal adaptations) should be done in hardware.

The invention solves the problem, inter alia, of providing an integrated modem circuit as defined in the preamble, which can operate at a much higher speed, and is advantageous, inter alia, in that it is low cost, accurate, flexible, and in that it offers the simultaneous design of hardware parts and of software parts.

## Claims

1. An integrated modem circuit comprising a processor-system (1) and hardware (2,3) for exchanging signals with another modem circuit, which integrated modem circuit comprises a digital phase locked loop filter (11), **characterized in that** said integrated modem circuit exchanges signals with another modem circuit at 1 Mb/s or more, with said processor-system (1) comprising filter software (11) for embodying said digital phase locked loop filter and with said hardware (2,3) comprising at least one module (22,32) for compensating for sample processing.

2. The integrated modem circuit according to claim 1, **characterized in that** said processor-system (1) comprises sample software (14,15) for processing samples in dependence of results originating from said phase locked loop filter (11).

3. The integrated modem circuit according to claim 2, **characterized in that** said hardware (2,3) comprises in a transmission path (2) a mapper (21), a rotor (22) and an inverse Fourier transformator (23) and in a receiving path (3) a Fourier transformator (33), a rotor (32) and a demapper (31), with at least one of said rotors (22,32) forming said module.

4. The integrated modem circuit according to claim 3, **characterized in that** said processor-system (1) comprises control software (12,13) for controlling at least one of said rotors (22,32) in dependence of results originating from said phase locked loop filter (11), with at least one of said transformators (23,33) being controlled by results originating from said sample software (14,15).

5. The integrated modem circuit according to claim 1, 2, 3 or 4, **characterized in that** said processor-system (1) performs an initialization step (101) for initiating software to be run via said processor-system (1) and/or a reading step (102) for reading a software part at an address in a memory and/or a first detection step (104) for detecting a first instruction and/or a second detection step (105) for detecting a second instruction and/or a third detection step (106) for detecting an execution and/or an execution step (108,109) for performing at least one execution.

6. The integrated modem circuit according to claim 5, **characterized in that** said processor-system (1) performs in response to a positive detection (104) of said first instruction a first adaptation step (110) followed by at least a fourth detection step (111) and/or a fifth detection step (112), with said first adaptation step (110) and/or said fourth detection step (111) and/or said fifth detection step (112) being followed by a first incrementation step (114) for incrementing said address.

7. The integrated modem circuit according to claim 6, **characterized in that** said processor-system (1) performs in response to a positive detection (105) of said second instruction a sixth detection step (115) followed by at least a second adaptation step (116,117), with said second adaptation step (116,117) and/or said sixth detection step (115) being followed by a second incrementation step (118) for incrementing said address.

8. A processor-system (1) for use in an integrated modem circuit comprising said processor-system (1) and hardware (2,3) for exchanging signals with another modem circuit, which integrated modem circuit comprises a digital phase locked loop filter (11), **characterized in that** said integrated modem circuit exchanges signals with another modem circuit at 1 Mb/s or more, with said processor-system (1) comprising filter software (11) for embodying said digital phase locked loop filter and with said hardware (2,3) comprising at least one module (22,32) for compensating for sample processing.

9. A processor program product to be run via a processor-system (1) for use in an integrated modem circuit comprising said processor-system (1) and hardware (2,3) for exchanging signals with another modem circuit, which integrated modem circuit comprises a digital phase locked loop filter (11), **characterized in that** said integrated modem circuit exchanges signals with another modem circuit at 1 Mb/s or more, with said processor program product comprising the function of filtering (11) for embodying said digital phase locked loop filter, and with said hardware (2,3) comprising at least one module (22,32) for compensating for sample processing.

10. A method for use in an integrated modem circuit comprising a processor-system (1) and hardware (2,3) for exchanging signals with another modem circuit, which integrated modem circuit comprises a digital phase locked loop filter (11), **characterized in that** said integrated modem circuit exchanges signals with another modem circuit at 1 Mb/s or more, with said method comprising the steps of filtering for embodying said digital phase locked loop filter by means of filtering software (11) and of compensating for sample processing by means of at least one module (22,32) of said hardware (2,3).
